# FASCICULE DE BREVET EUROPEEN

(11) **EP 2 927 123 B1**
(45) Date de publication et mention de la délivrance du brevet: **01.02.2017**
(21) Numéro de dépôt: 15162267.7
(22) Date de dépôt: 01.04.2015
(51) Int. Cl.: B64D 1/16

(54) **MODULE D'ÉPANDAGE AUTO-PORTÉ PAR UN DRONE AÉRIEN**
SELBSTTRAGENDES STREUMODUL FÜR EINE DROHNE
SELF-SUPPORTED SPREADER MODULE OF AN AIRBORNE DRONE

(30) Priorité: 02.04.2014 FR 1400802
(43) Date de publication de la demande: 07.10.2015
(73) Titulaire: MC-CLIC, 98000 Monaco (MC)
(72) Inventeur: Grimaud, Erwan, 98000 Monaco (MC)
(74) Mandataire: Schuffenecker, Thierry

(56) Documents cités:
- WO-A1-94/25111
- GB-A- 2 154 718
- US-A- 4 158 323
- US-A- 4 881 601

## Description

### Domaine technique de l'invention

La présente invention concerne les modules d'épandages et notamment un module d'épandage spécialement conçu pour les drones aériens.

### Etat de la technique

Un dispositif d'épandage classique nécessite à ce jour l'utilisation d'une grue ou d'une nacelle sur un camion prévu à cet effet mais également celle d'un pistolet applicateur, d'un opérateur et d'un grand nombre de mécanismes de sécurité. Le camion avec la nacelle est déplacé à l'endroit désiré pour permettre à l'opérateur - protégé au sein de sa nacelle - de traiter en toute sécurité les arbres etc...

Mais cette méthode conventionnelle comporte bien des inconvénients.

Tout d'abord une perte de temps manifeste car il faut constamment, avec cette méthode conventionnelle, déplacer le véhicule porteur pour pouvoir traiter successivement les arbres malades. Le trajet entre les arbres prend un certain temps et, par mesure de sécurité bien évidente, il est nécessaire de faire descendre l'opérateur, de replier la nacelle et de déplacer le camion pour pouvoir traiter l'arbre suivant.

Par ailleurs, cette méthode comporte des limites en raison du fait que la nacelle étant montée sur un camion, celle-ci ne peut aisément se mouvoir en tout lieu pour pouvoir aller atteindre et traiter des lieux d'infection restreints ou d'accès difficile.

Et ensuite, il n'aura échappé à personne que même lorsque l'on parvient à atteindre le lieu de l'infection, le déplacement du véhicule, son poids et les traces de roues laissent des résidus hautement inesthétique dans l'environnement.

Enfin, et cela n'est pas le moindre inconvénient, la méthode conventionnelle est coûteuse à mettre en oeuvre. Elle requiert l'intervention de plusieurs personnes, augmentant ainsi le risque d'erreur humaine, mais fait également courir un risque aux travailleurs car l'éventualité d'accidents persiste et ce malgré les mesures de sécurité mises en oeuvre.

Un module d'épandage aéroporté est en outre connu à partir du document US-A-4 158 323.

En bref, tout le dispositif est par conséquent limité et surtout très coûteux et très difficile à mettre en place au niveau de l'organisation d'une ville (travail de nuit, horaires restreints, etc..)

La présente invention a pour objet de remédier à ces inconvénients et d'offrir une solution alternative pour assurer un traitement efficace des arbres et des espèces, par exemple celle des palmiers qui souffrent de l'effet ravageur du charançon rouge, mais également d'autres traitements possibles.

Et même des traitements contre l'incendie.

### Exposé de l'invention

La présente invention a pour but de proposer un module d'épandage et, plus particulièrement, un module d'épandage spécialement conçu pour les drones aériens permettant à un opérateur d'effectuer un épandage depuis le sol en toute sécurité avec un gain de temps et de maniabilité significatif en adaptant ce module sur un drone.

Un autre but de la présente invention consiste à proposer un dispositif d'épandage léger pouvant être fixé sur un drone aérien et permettant un épandage aisé et particulièrement flexible pouvant s'adapter à toutes sortes de situation.

C'est un autre but de la présente invention que de fournir un module d'épandage pouvant également servir à l'épandage de produits de traitement contre l'incendie.

L'invention réalise ces buts au moyen d'un module d'épandage destiné à être fixé sur un drone aérien pour permettre l'épandage de produit actif, comportant une unité centrale dotée d'une base et d'un support avec un logement destiné à recevoir un système de pointage laser. Le support comporte un volume limité par une surface plane (S) délimitée par une ligne fermée et une droite perpendiculaire au plan contenant la surface (S) et deux plans parallèles au plan de la surface (S) respectivement inférieur et supérieur. Le plan inférieur est fixé à la base tandis que le plan supérieur comporte un orifice pour le passage du rayon laser du système de pointage. La ligne fermée et la droite perpendiculaire au plan contenant la surface forment respectivement la directrice et la génératrice de la surface latérale du volume interne du support (20).

La ligne fermée comprend trois arcs de cercles destinés à générer au moins trois surfaces d'appui pour des récipients contenant du produit d'épandage, et dont la libération peut être commandée électriquement depuis le sol.

De préférence, la surface plane (S) est configurée avec trois arcs de cercles orientés à 120 degrés de manière à générer respectivement trois surfaces cylindriques orientées à 120 degrés pour recevoir trois récipients de section sensiblement cylindrique.

La base du module comporte des trous de fixation pour la fixation au drone et chaque container comporte deux pattes de fixation (33) sur la partie supérieure du logement destinées à recevoir un clapet électriquement commandé par servomoteur.

De préférence, l'unité centrale ainsi que chacun des containers sont réalisés en plastique P.L.A. au moyen d'une imprimante 3D, et spécifiquement avec un maillage de l'ordre de 50%.

On parvient ainsi, très avantageusement, à réduire significativement le poids de l'ensemble tout en préservant une grande solidité et flexibilité à la structure.

De préférence, le produit actif est un produit d'épandage destiné au traitement des palmiers et notamment destiné à tuer le charançon rouge.

Alternativement, le produit actif pourra être un produit contre le traitement des incendies.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une vue en perspective du support 100 permettant la fixation des récipients cylindriques.
La figure 2 représente la vue de dessus sur support 100.
La figure 3 illustre la vue de dessous du support 100 montrant le détail de la base 10 fixée au drone.
La figure 4 illustre la vue de dessus d'une section S de la surface fermée, génératrice du volume 20 d'appui des containers ou récipients.
La figure 5 illustre plus particulièrement la section en coupe du volume 20 montrant la faible épaisseur de plastique P.L.A. requis pour réaliser la structure.
La figure 6 illustre une vue de côté d'un container ou récipient destiné à contenir le produit d'épandage.
La figure 7 illustre une vue arrière d'un container ou récipient destiné à contenir le produit d'épandage avec l'encoche devant recevoir le clapet de fermeture.
La figure 8 illustre une vue en perspective d'un container ou récipient destiné à contenir le produit d'épandage. Les supports 31 et 32 servant à la fixation du servocommande.
Les figures 9 et 10 illustrent respectivement une vue de dessus et une vue en perspective du clapet de libération des containers.
La figure 11 est une vue en perspective illustrant l'assemblage de deux containers 30 et 40 avec leur clapet de fermeture (35) sur le support 100.

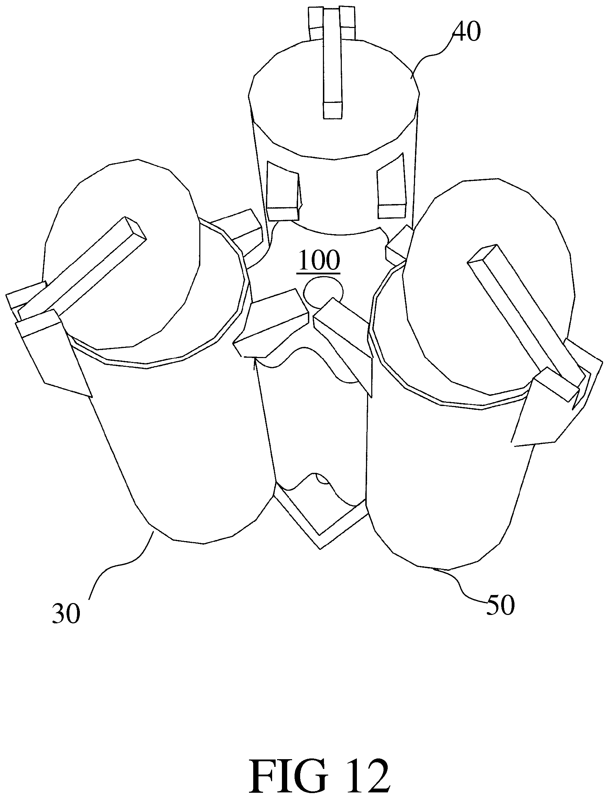

La figure 12 illustre une vue en perspective du module comportant le support et trois containers 30,-50.
La figure 13 illustre le tracé en zig-zag du procédé d'impression 3D mis en oeuvre pour la réalisation de la structure d'accueil (100).
La figure 14 illustre le tracé en zig-zag du procédé d'impression 3D mis en oeuvre pour la réalisation de la base.
La figure 15 illustre les tracés en zig-zag du procédé d'impression 3D mis en oeuvre pour l'ensemble des éléments constitutifs du module d'épandage.

### Description d'un mode de réalisation préféré

L'on décrit à présent la réalisation d'un module d'épandage pour drone aérien permettant de multiples applications, et spécifiquement le traitement des espèces végétales. Le module décrit ci-après est particulièrement adapté, grâce à une visée laser performante, au traitement des palmiers contre les insectes, et notamment le charançon rouge.

Il ne s'agit cependant que d'un exemple d'application, nullement limitatif, et un homme du métier pourra aisément adapter le dispositif à toute autre application.

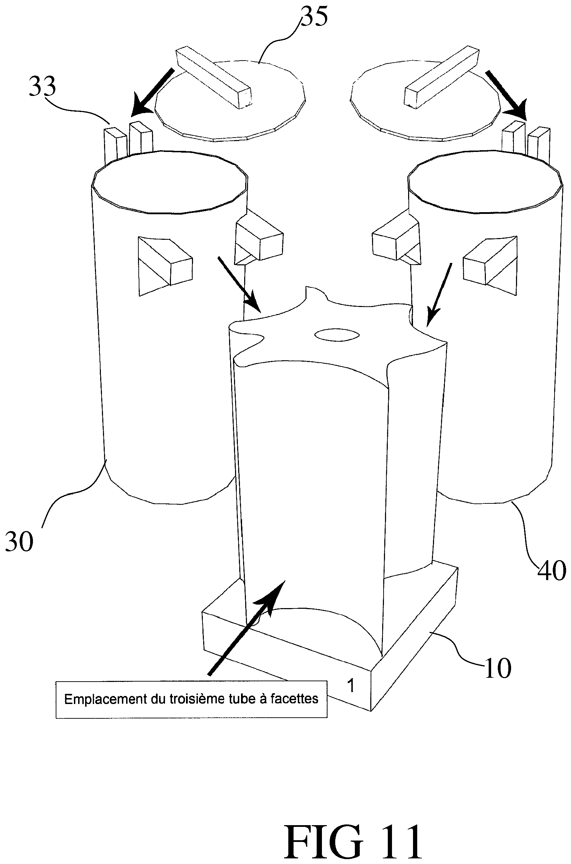

Le module d'épandage, dont une perspective est illustré en figure 11, se compose d'une unité centrale 100, communément désignée sous le nom de fantaisie « *squelette* », sur lequel sont fixés jusqu'à trois containers ou récipients 30-40-50 destinés à contenir des produits d'épandage, soit identiques, soit différents, pouvant être libérés soit simultanément soit successivement.

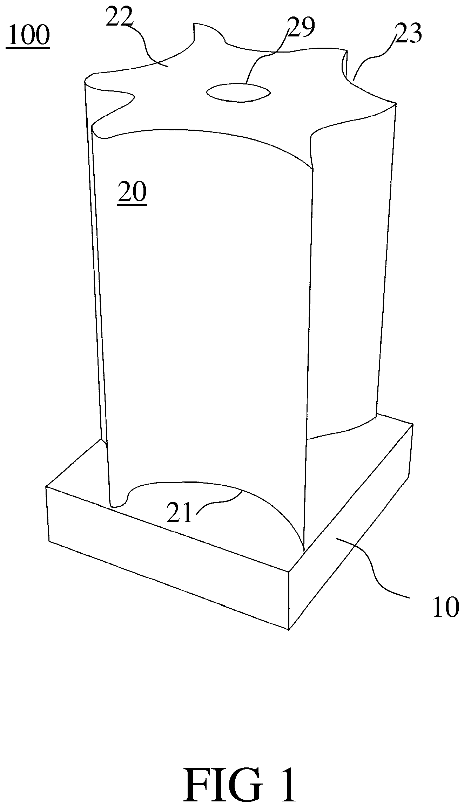

La figure 1 montre plus particulièrement une perspective de l'unité centrale 100 qui comporte une embase 10 permettant la fixation du module sur un drone aérien (non représenté), ainsi qu'un support 20 doté d'un logement (29) destiné à recevoir un système de pointage laser, tel que, par exemple, un laser vert de puissance égale à 100mW ou 200mW.

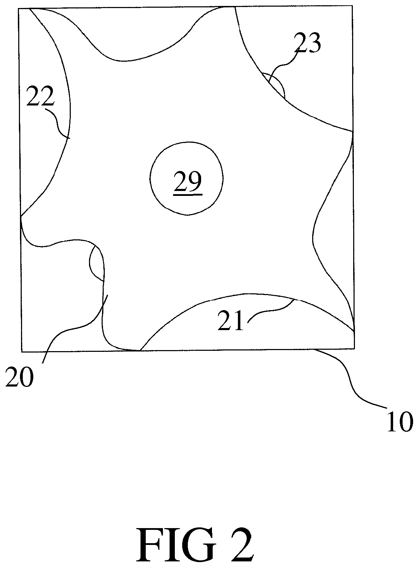

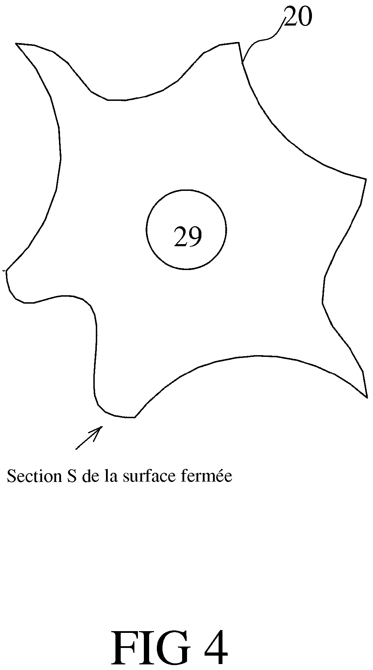

D'une manière générale, le support 20 présente un volume limité par une surface e plane (S) (représentée dans la figure 4) et une droite perpendiculaire au plan contenant la surface (S) et deux plans parallèles au plan de la surface (S) respectivement inférieur et supérieur. Le plan inférieur est fixé à la base 10 tandis que le plan supérieur comporte un orifice 29 pour le passage du rayon laser du système de pointage, comme cela est illustré dans la figure 2 montrant une vue de dessus de l'unité centrale.

Dans un mode de réalisation préféré, la surface plane (S) comporte une ligne fermée comprenant trois arcs de cercles, respectivement 21, 22 et 23, orientés à 120 degrés de manière à générer respectivement trois surfaces latérales d'appui cylindriques orientées à 120 degrés destinées à la fixation, notamment par collage, de containers 30-40-50, de section sensiblement cylindriques, configurés sous la forme de tubes à facettes.

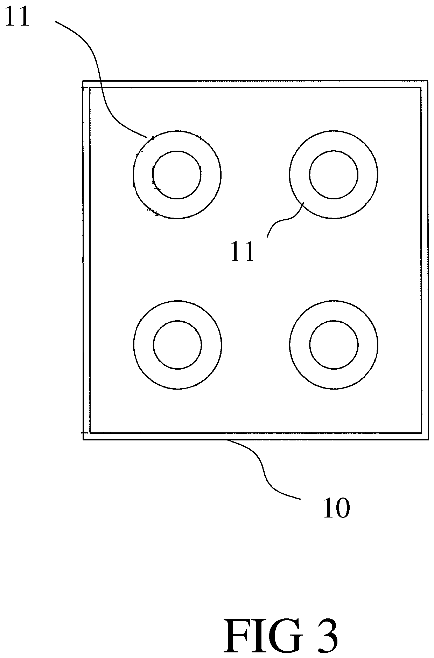

La figure 3 illustre la vue de dessous du support 100 montrant le détail de la base 10, ou l'on voit un jeu de quatre trous 11 permettant la fixation du module au drone aérien.

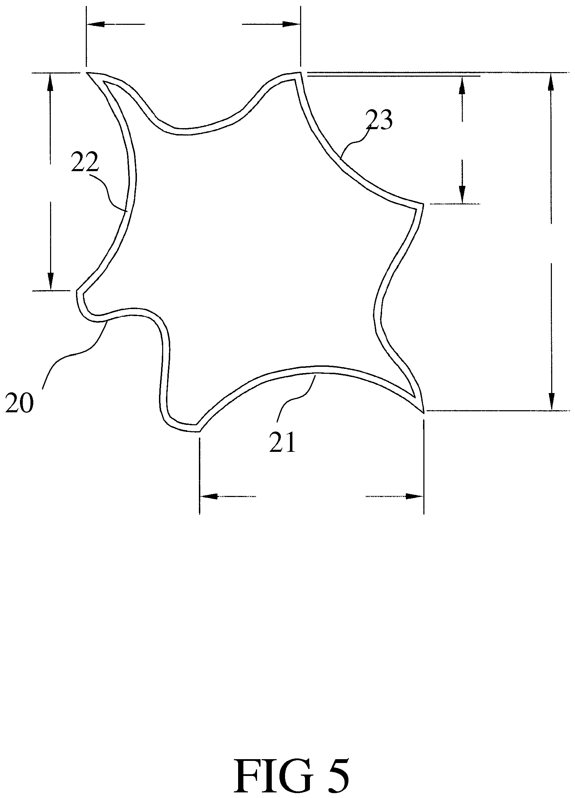

La figure 5 illustre plus particulièrement la section en coupe du support 20 montrant la faible épaisseur de cloison de ce dernier.

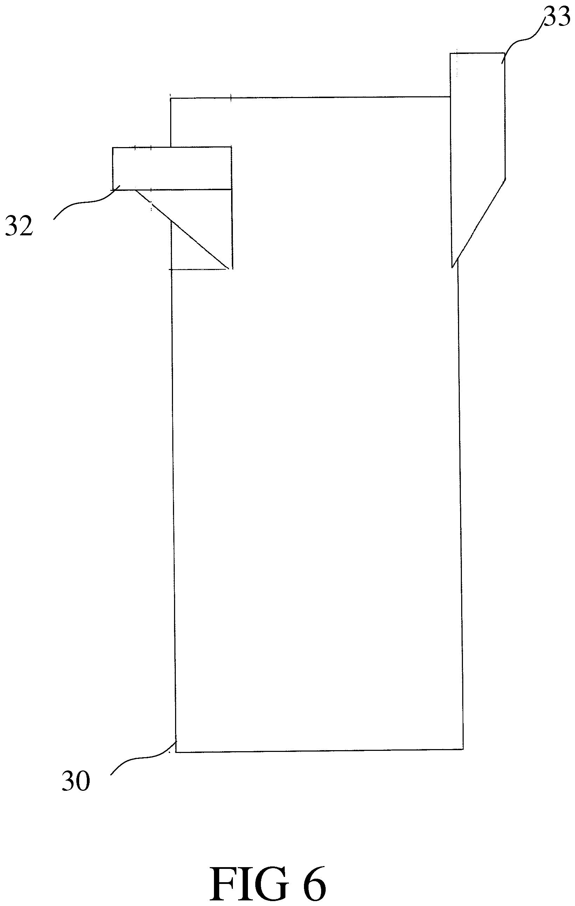

L'on décrit à présent, en relation avec la figure 6 un container, par exemple le container 30 à coller ou fixer sur l'unité centrale 100, et destiné à contenir le produit d'épandage. Le container 30 présente une configuration sensiblement cylindrique, de manière à pouvoir venir prendre appui sur les surfaces d'appui générées sur le support 10.

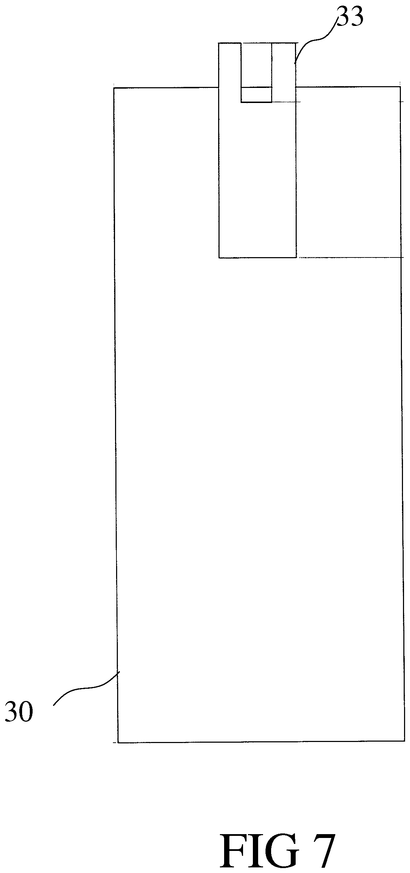

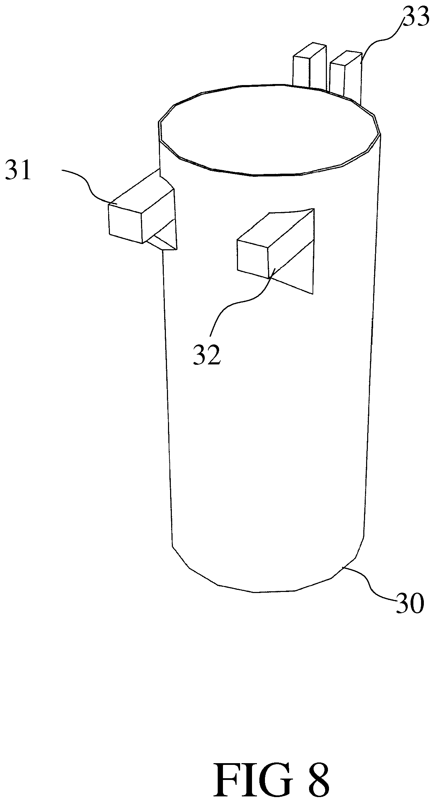

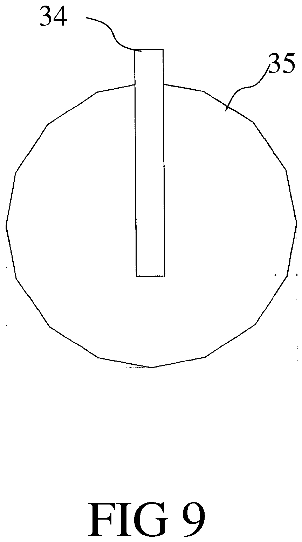

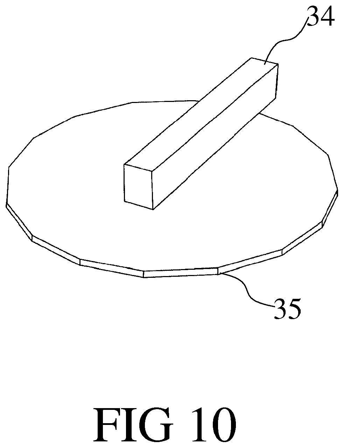

La figure 7 est une élévation du container 30 tandis que la figure 8 montre une perspective de ce même container ou l'on observe deux pattes de fixation 31 et 32 directement construit dans la masse sur le plan supérieur du container 30, ainsi qu'un élément de fixation 33 pour une articulation d'un clapet 35 qui est plus spécifiquement illustré dans la vue de dessus de la figure 9 et également dans la vue en perspective de la figure 10. Les deux pattes de fixation 31 et 32 reçoivent un servomoteur permettant une commande électrique de l'ouverture et de la fermeture du container 30.

Dans un mode de réalisation particulier, chacun des éléments du module d'épandage est réalisé, non par moulage comme cela est effectué conventionnellement, mais à partir d'une impression 3D permettant d'obtenir les avantages suivants :
- légèreté,
- absorption des vibrations générées par le drone.
- remplissage des parties creuses par un maillage qui entraîne une meilleure résistance de la structure aux contraintes.

De préférence, l'unité centrale 100 et chacun des containers 30, 40 et 50 est réalisé en plastique P.L.A. (Acide Polylactique) au moyen d'une imprimante 3D, ce qui permet d'obtenir une structure capable à la fois d'absorber les vibrations générées par le drone mais également de délimiter un grand logement pour accueillir le système de pointée laser.

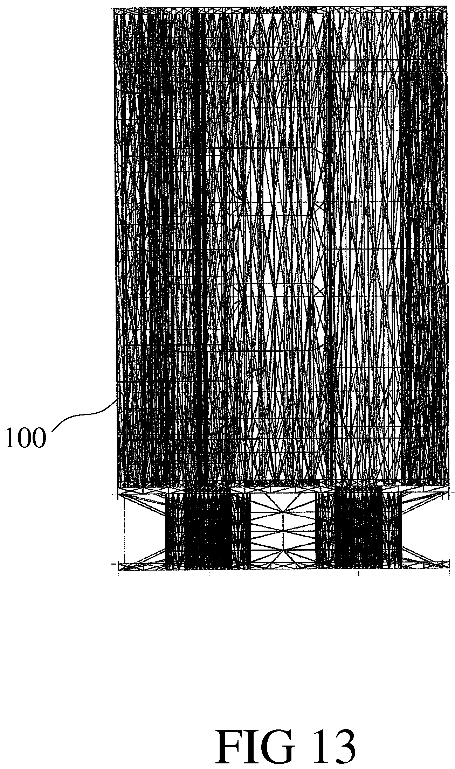

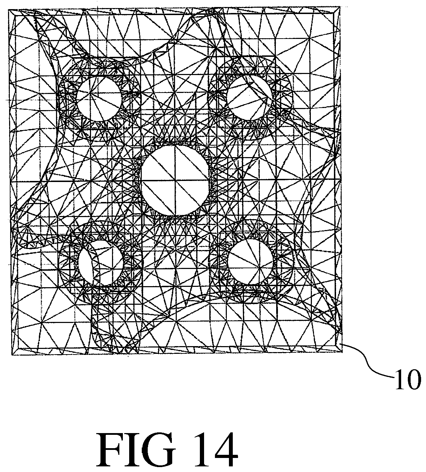

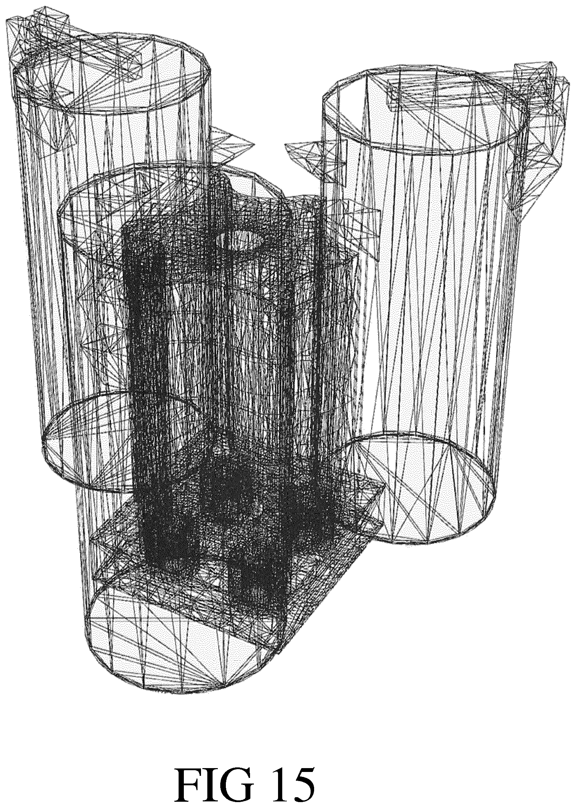

En outre, L'impression 3D permet non seulement de fixer le maillage interne de chaque partie du module, mais permet également de réaliser une structure particulièrement légère et qui reste flexible. De préférence, on configure les paramètres d'impression 3D avec les réglages suivants : Précision 0,25mm, maillage interne : 50%, lissage/perspective : off, raft : off, structure de soutien : aucune. Les squelettes qui en découlent et les traits en zig - zag en résultant (illustrés dans les figures 13-14-15) contribuent à réaliser des éléments permettant d'obtenir un compromis optimum entre solidité, souplesse et légèreté des modules.

Le choix de ce type de fabrication permet de choisir le maillage interne de chaque partie du module. L'exécution de ceux-ci est également réalisée à l'aide d'une imprimante 3D, réglage fin (de 100 à 200 microns), de manière d'une part à alléger au maximum la structure et d'autre part de créer la souplesse des tubes tout en conservant une solidité maximale. Le plastique P.L.A a de nombreux avantages notamment le respect de l'environnement car il est biodégradable et sa grande résistance à la déformation. Chaque container/cylindre est muni d'un clapet très fin (quelques millimètres) en léger débordement, actionné par une servocommande de type « *coreless* » (ie un servocommande n'utilisant pas qu'un seul pignon mais un ensemble d'engrenages limitant ainsi le poids et réduisant les forces de frottement entraînant ainsi une réaction plus rapide de celui-ci). Le support de servocommande et le système d'accrochage du clapet (effectué par vis inox) sont creux avec un maillage interne. La fixation des tubes sur l'unité centrale compacte à équidistance l'un de l'autre a été prévue afin d'éviter des remontées de poudre lors du largage, remontées qui auraient pu être généré par le flux des hélices.

On parvient ainsi, très avantageusement, à réduire significativement le poids de l'ensemble tout en préservant une grande solidité et flexibilité à la structure. Un module d'épandage de moins de 680 grammes hors servocommandes a ainsi pu être réalisé grâce à ce procédé.

Dans un mode de réalisation particulier, les containers ou tubes se composent d'une double paroi renforcée à sa base ainsi que sur sa périphérie.

Le tout est radio commandé à distance à partir de la télécommande du drone de part les connexions raccordées sur le contrôleur de vol et son récepteur.

Si le module d'épandage qui vient d'être décrit est particulièrement adapté à la mise en oeuvre de traitements spécifiques contre des insectes, tels que le charançon rouge s'attaquant aux palmiers, d'autres applications sont envisageable, et notamment le traitement des incendies. En effet, l'on a observé que le module pouvait être aisément adapté pour tout type d'épandage phytosanitaire.

## Revendications

1. Module d'épandage destiné à être fixé sur un drone aérien pour permettre l'épandage de produit actif, comportant :
- une unité centrale (100) comportant une base (10) et un support (20) comportant un logement destiné à recevoir un système de pointage laser, ledit support (20) comportant un volume limité par une surface plane (S) délimitée par une ligne fermée et une droite perpendiculaire au plan contenant la surface (S) et deux plans parallèles au plan de la surface (S) respectivement inférieur et supérieur ; le plan inférieur étant fixé à la base (10) et le plan supérieur comportant un orifice (29) pour le passage du rayon laser du système de pointage, la ligne fermée et ladite droite perpendiculaire au plan contenant la surface formant respectivement la directrice et la génératrice de la surface latérale du volume interne du support (20) ; la ligne fermée comprenant trois arcs de cercles destinés à générer au moins trois surfaces d'appui destinées à correspondre à celle de trois récipients cylindriques (30, 40, 50) ;
- trois récipients destinés à contenir du produit d'épandage fixés sur le support (100), et comportant des moyens (35) commandés électriquement pour libérer le produit d'épandage contenu dans les récipients.

2. Module d'épandage selon la revendication 1 **caractérisé en ce que** la surface plane (S) est configurée avec trois arcs de cercles orientés à 120 degrés de manière à générer respectivement trois surfaces cylindriques orientées à 120 degrés.

3. Module d'épandage selon la revendication 1 **caractérisé en ce que** la base comporte des trous de fixation (11) pour la fixation du module au drone.

4. Module d'épandage selon la revendication 1 **caractérisé en ce que** chaque récipient (30, 40, 50) comporte deux pattes de fixation (31, 32) sur le plan supérieur de ce récipient (30, 40, 50), destinées à recevoir un clapet (35) commandé électriquement par servomoteur.

5. Module d'épandage selon la revendication 1, 2 ou 2 **caractérisé en ce que** l'unité centrale (100) et chacun des récipients (30, 40, 50) sont réalisés en plastique P.L.A. au moyen d'une imprimante 3D.

6. Module d'épandage selon la revendication 5, **caractérisé en ce que** l'unité centrale (100) et les containers (30, 40, 50) sont réalisés par impression sur imprimante 3D en appliquant un maillage de 50%.

7. Module d'épandage selon l'une des revendications précédentes **caractérisé en ce qu'**il est adapté à recevoir un laser vert de 100mW à 200mW.

8. Module d'épandage selon l'une quelconque des revendications précédentes, **caractérisé en ce qu'**il est adapté à recevoir comme produit actif un produit d'épandage destiné au traitement des palmier et notamment pour tuer le charançon rouge.

9. Dispositif selon la revendication 8 **caractérisé en ce qu'**il est adapté à recevoir un produit d'épandage pour tout traitement phytosanitaire.

10. Dispositif selon la revendication 8 **caractérisé en ce qu'**il est adapté à recevoir un produit d'épandage pour le traitement contre l'incendie.

## Patentansprüche

1. Streumodul zur Anbringung an einer fliegenden Drohne, um ein wirkendes Produkt zu verteilen, aufweisend:
- eine zentrale Einheit (100) mit einer Basis (10) und einem Träger (20), mit einem Gehäuse zur Aufnahme eines Laserpointersystems, wobei besagter Träger (20) ein Volumen hat, das beschränkt ist durch eine ebene Fläche (S), welche begrenzt ist durch eine geschlossene Linie und eine Gerade senkrecht zu der Ebene, welche die Fläche (S) enthält, und zwei Ebenen parallel zu der Ebene der Fläche (S), jeweils eine obere und eine untere; wobei die untere Ebene an der Basis (10) fixiert ist und die obere Ebene eine Öffnung (29) zum Durchlass des Laserstrahls des Laserpointersystems hat, die geschlossene Linie und die besagte Gerade senkrecht zur Ebene, welche die Fläche enthält, die Leitende und die Erzeugende der Seitenflächen des internen Volumens des Trägers (20) bilden; die geschlossene Linie drei Kreisbögen aufweist, um wenigstens drei Trägerflächen zu erzeugen, die ausgebildet sind, um denen von drei zylinderförmigen Behältern (30, 40, 50) zu entsprechen;
- drei Behälter, die am Träger fixiert sind, um das zu verteilende Produkt zu enthalten, und aufweisend Mittel (35), die elektrisch gesteuert werden, um das in den Behältern enthaltene Produkt freizugeben.

2. Streumodul nach Anspruch 1, **dadurch gekennzeichnet, dass** die ebene Fläche (S) mit drei in 120° ausgerichteten Bögen ausgebildet ist, um so jeweils drei zylinderförmige Flächen zu erzeugen, die in 120° ausgerichtet sind.

3. Streumodul nach Anspruch 1, **dadurch gekennzeichnet, dass** die Basis Fixieröffnungen (11) zum Fixieren des Moduls an der Drohne hat.

4. Streumodul nach Anspruch 1, **dadurch gekennzeichnet, dass** jeder Behälter (30, 40, 50) zwei Befestigungslaschen (31, 32) an der oberen Ebene des Behälters (30, 40, 50) zur Aufnahme eines elektrisch über einen Stellantrieb gesteuerten Ventils (35) hat.

5. Streumodul nach Anspruch 1, 2 oder 3, **dadurch gekennzeichnet, dass** die zentrale Einheit (100) und jeder der Behälter (30, 40, 50) aus PLA-Kunststoff mittels eines 3D Druckers hergestellt sind.

6. Streumodul nach Anspruch 5, **dadurch gekennzeichnet, dass** die zentrale Einheit (100) und die Behälter (30, 40, 50) mittels eines 3D Druckers unter Anwendung einer 50% Gitterweite ausgebildet sind.

7. Streumodul nach einem der vorhergehenden Ansprüche, **dadurch gekennzeichnet, dass** es ausgebildet ist, um einen grünen Laser mit 100mW bis 200mW aufzunehmen.

8. Streumodul nach einem der vorhergehenden Ansprüche, **dadurch gekennzeichnet, dass** es ausgebildet ist, um als wirkendes Produkt ein Sprühmittel zur Behandlung von Palmen und insbesondere zum Töten des roten Palmenrüsselkäfers aufzunehmen.

9. Vorrichtung nach Anspruch 8, **dadurch gekennzeichnet, dass** sie ausgebildet ist, um ein Streumittel zur Pflanzenbehandlung aufzunehmen.

10. Vorrichtung nach Anspruch 8, **dadurch gekennzeichnet, dass** sie ausgebildet ist, um ein Streubehandlungsmittel gegen Feuer aufzunehmen.

## Claims

1. A spreading module for attachment to an airborne drone for allowing spreading of an active product, comprising:
- a central unit (100) having a base (10) and a support (20) having a housing for receiving a laser pointing system, said support (20) having a volume limited by a plane surface (S) defined by a closed line and a straight line perpendicular to the plane containing the surface (S) and two planes parallel to the plane of the surface (S), respectively upper and lower; the lower plane being fixed to the base (10) and the upper plane having an orifice (29) for the passage of the laser beam of the laser pointing system, the closed line and said straight line perpendicular to the plane containing the surface forming, respectively, the director and generatrix of the side surface of the internal volume of the support (20); the closed line comprising three circular arcs for generating at least three support surfaces designed to correspond to that of three cylindrical containers (30, 40, 50);
- three containers fixed on the support, for containing the product to be spread, and comprising means (35) being electrically controlled to release the product included into the containers.

2. The spreading module of claim 1 **characterized in that** the flat surface (S) is configured with three arcs oriented at 120 degrees so as to respectively generate three cylindrical surfaces oriented at 120 degrees.

3. The spreading module of claim 1 **characterized in that** the base has fixing holes (11) for fixing the module to the drone.

4. The spreading module of claim 1 **characterized in that** each container (30, 40, 50) has two fixing lugs (31, 32) on the upper plane of the container (30, 40, 50) for receiving a valve (35) being electrically controlled by an actuator.

5. The spreading module of claim 1, 2 or 3 **characterized in that** the central unit (100) and each of the containers (30, 40, 50) are made of plastic P.L.A. by means of a 3D printer.

6. The spreading module of claim 5 **characterized in that** the central unit (100) and the containers (30, 40, 50) are formed by printing on 3D printer by applying a 50% mesh.

7. The spreading module according to anyone of the preceding claims **characterized in that** it is configured to receive a green laser 100mW to 200mW.

8. The spreading module according to anyone of the preceding claims **characterized in that** it is adapted to receive, as an active product, a spray product for the treatment of palm and in particular to kill the red palm weevil.

9. The device according to claim 8 **characterized in that** it is configured to receive a grit of any phytosanitary treatment.

10. The device according to claim 8 **characterized in that** it is configured to receive a spreading treatment product against the fire.
